# EUROPÄISCHE PATENTSCHRIFT

(11) **EP 2 666 557 B1**
(45) Veröffentlichungstag und Bekanntmachung des Hinweises auf die Patenterteilung: **06.07.2016**
(21) Anmeldenummer: 13164064.1
(22) Anmeldetag: 17.04.2013
(51) Int. Cl.: B09C 1/00, C04B 33/132, E02F 5/28

(54) **VERFAHREN ZUR AUFBEREITUNG VON FLUSSSEDIMENTEN SOWIE WASSERFAHRZEUG ZUR DURCHFÜHRUNG DESSELBEN**
METHOD FOR THE TREATMENT OF RIVER SEDIMENTS AND WATER VEHICLE FOR CARRYING OUT THE SAME
PROCÉDÉ DE TRAÎTEMENT DE SÉDIMENTS FLUVIAUX ET VÉHICULE AQUATIQUE PERMETTANT DE RÉALISER LE PROCÉDÉ

(30) Priorität: 23.05.2012 AT 501962012
(43) Veröffentlichungstag der Anmeldung: 27.11.2013
(73) Patentinhaber: via donau - Österreichische Wasserstraßen-Gesellschaft m.b.H., 1220 Wien (AT)
(72) Erfinder: Kessler, Franz Alois, 8700 Leoben (AT); Morak, Hans Jürgen, 9554 St. Urban (AT); Becker, Alexander, 9521 Treffen (AT); Dieplinger, Klaus, 4082 Aschach (AT)
(74) Vertreter: Wirnsberger, Gernot

(56) Entgegenhaltungen:
- EP-A1- 0 392 144
- EP-A1- 0 482 269
- DE-A1- 3 150 993
- DE-A1- 3 744 695
- DE-U1- 8 624 773

## Beschreibung

Die Erfindung betrifft ein Verfahren zur Gewinnung von Produkten aus Schlamm eines Gewässers auf einem Wasserfahrzeug, wobei aus dem Schlamm Feststoffe in mehreren Fraktionen unterschiedlicher Korngröße gewonnen werden.

Weiter betrifft die Erfindung ein Wasserfahrzeug zur Gewinnung von Produkten aus Schlamm eines Gewässers.

Weil natürliche und künstliche Gewässer aufgrund von Sedimentation versanden bzw. verschlammen, ist es regelmäßig erforderlich, Schifffahrtsrinnen in Gewässern von Schlamm zu befreien. Hierzu werden zumeist Bagger eingesetzt und ein entfernter Schlamm an einen Lagerort transportiert und dort gelagert. Aus dem Stand der Technik sind verschiedene Verfahren und Vorrichtung zum Fördern von Schlamm aus Gewässern, insbesondere Flussbetten, bekannt geworden, um beispielsweise Fahrrinnen freizulegen. Nachteilig bei derartigen Verfahren ist, dass mit einer Entfernung des Schlammes aus dem Gewässer in ein Ökosystem eingegriffen wird. Häufig wird der entfernte Schlamm auch nur an eine andere Position im Flussbett befördert, wodurch eine Verschlammungsproblematik nur verlagert wird.

EP 0 392 144 A1 offenbart eine Gewinnung von Produkten aus Schlamm eines Gewässers. Hier setzt die Erfindung an. Aufgabe der Erfindung ist es, ein Verfahren der eingangs genannten Art anzugeben, welches nur geringfügig in das Ökosystem eingreift und gleichzeitig verwertbare Produkte liefert.

Eine weitere Aufgabe ist es, ein Wasserfahrzeug der eingangs genannten Art anzugeben, mit welchem ein erfindungsgemäßes Verfahren durchführbar ist.

Die erste Aufgabe wird dadurch Anspruch 1 gelöst, wobei einem Verfahren der eingangs genannten Art grobe Feststoffe mit einer Korngröße oberhalb eines ersten Grenzwertes sowie Organismen und organische Bestandteile mit einer Korngröße oberhalb eines zweiten Grenzwertes in das Gewässer rückgeführt werden und anorganische Feststoffe unterhalb des ersten Grenzwertes zu zumindest einem Produkt verarbeitet werden.

Aufgrund eines Rückführens von groben Feststoffen, die eine Korngröße oberhalb des ersten Grenzwertes aufweisen, der etwa 1 mm beträgt, wird eine Menge an zu transportierendem Material minimiert, wodurch Transportkosten gespart werden. Weil Organismen und organische Bestandteile mit einer Korngröße oberhalb des zweiten Grenzwertes, der bevorzugt kleiner als der erste Grenzwert ist und etwa 0,04 mm beträgt, ebenfalls in das Gewässer rückgeführt werden, wird ein Eingriff in das Ökosystem des Gewässers minimiert. Aufgrund des Verarbeitens von anorganischen Feststoffen zu zumindest einem Produkt werden Lagerkosten gespart und über einen Verkauf des Produktes Erlöse erzielt. Aus gefördertem Schlamm können beispielsweise Produkte wie Feinsand und/oder Schlick mit einer definierten Korngröße gebildet werden, die insbesondere im Straßenbau verwertbar sind.

Um Transportkosten weiter zu reduzieren, wird bevorzugt anfallendes Prozesswasser in das Gewässer rückgeführt. Dadurch wird auch ein Eingriff in das Ökosystem bei gleichzeitiger Verbesserung einer Wirtschaftlichkeit weiter minimiert, weil dem Ökosystem beispielsweise im Prozesswasser befindliche Organismen wieder zugeführt werden. Es kann jedoch auch vorgesehen sein, das Prozesswasser in einem gesonderten Verfahren zu reinigen und nicht direkt in das Gewässer rückzuführen.

Zweckmäßigerweise wird ein Überlauf von Entwässerungs- und/oder Klassiereinrichtungen eingedickt und mittels Pressen zu einem Produkt, insbesondere Schlick, verarbeitet. Mit diesem Verfahrensschritt kann auch aus Feststoffen geringer Korngröße ein verwertbares Produkt hergestellt werden. So können beispielsweise in einem ersten Verfahrensschritt Feststoffe mit einer Korngröße oberhalb des zweiten Grenzwertes mittels Zyklonen oder anderen Klassiereinrichtungen abgetrennt werden und jener Teil des Schlammes, der eine Korngröße unterhalb des zweiten Grenzwertes aufweist, mittels anschließendem Pressen weiterverarbeitet werden. Der Verfahrensschritt des Pressens hat auch den Vorteil, dass Lagerkapazitäten reduziert werden, die auf einem Wasserfahrzeug beträchtliche Kosten verursachen.

Um das Verfahren effizienter zu gestalten, hat es sich bewährt, ein Flockungsmittel, insbesondere Kartoffelstärke, zum Eindicken einzusetzen. Dies hat insbesondere den Vorteil, dass der Schlamm besonders umweltschonend eingedickt werden kann, da Kartoffelstärke keine negativen Auswirkungen auf das Ökosystem hat.

Bevorzugt wird das Eindicken in zumindest einem Klärturm durchgeführt. In Klärtürmen bzw. sogenannten Hochklärern wird unter Zugabe des Flockungsmittels ein schnelles Absinken feiner Schlammpartikel gewährleistet, sodass ein rasches Verfahren erzielt wird. Bevorzugt wird der geförderte Schlamm in Einrichtungen wie Sieben und/oder Zyklonen von Feststoffen getrennt, die Korngrößen oberhalb des zweiten Grenzwertes von 0,04 mm aufweisen, und ein verbleibender Feinschlamm aus Überläufen der Siebe und/oder Zyklone in die Klärtürme geleitet, wo dieser vor einem Pressen zu Schlick mit dem Flockungsmittel eingedickt wird. Ein Überlauf der Klärtürme, welcher Wasser ohne Feststoffe enthält, kann in das Gewässer rückgeführt oder am Wasserfahrzeug zwischengelagert werden, um beispielsweise einer Kläranlage zugeführt zu werden.

Vorteilhaft ist es, wenn der Schlick eine Korngröße unterhalb des zweiten Grenzwertes aufweist, der kleiner als der erste Grenzwert ist. Ein zweiter Grenzwert von etwa 0,04 mm hat sich bewährt, um ein wirtschaftlich gut verwertbares Produkt bei gleichzeitig effizientem Verfahren zu erzielen.

Es von Vorteil, wenn zum Pressen zumindest eine Kammerfilterpresse, der insbesondere ein Homogenisierungsbecken vorgeschaltet ist, eingesetzt wird. Bewährt hat es sich, das Pressen bei hohen Drücken von etwa 600 bar durchzuführen, um auf wirtschaftliche Weise ein Produkt aus Feststoffen mit geringen Korngrößen, von weniger als 0,04 mm, zu gewinnen. Kammerfilterpressen haben sich diesbezüglich als besonders geeignet und zuverlässig erwiesen. Bevorzugt werden zumindest zwei Kammerfilterpressen parallel betrieben, um hohe Durchsätze zu erreichen und ein Ausfallsrisiko zu reduzieren. Die Homogenisierungsbecken dienen als Puffer, in denen kontinuierlich geförderter, bevorzugt bereits eingedickter Feinschlamm zwischengelagert wird, bis dieser in den Kammerfilterpressen aufgenommen werden kann. Ein Überlauf der Kammerfilterpressen wird mit Vorteil gemeinsam mit dem Überlauf der Siebe und/oder Zyklone in die Klärtürme geleitet, um abermals eingedickt und den Kammerfilterpressen zugeführt zu werden. Dadurch wird ein optimales Separieren der Feststoffe vom Schlamm gewährleistet.

Mit Vorteil werden die groben Feststoffe mit der Korngröße oberhalb des ersten Grenzwertes in einem ersten Prozessschritt, insbesondere mit zumindest einem Zweideck-Rüttelsieb, aussortiert. Dies vereinfacht das Verfahren, da so die groben Feststoffe bereits zu Beginn aus dem Verfahren aussortiert werden können. Darüber hinaus ist es vorteilhaft, diese groben Feststoffe sofort wieder in das Gewässer zurückzuführen, um keine Transportkapazitäten am Wasserfahrzeug zu blockieren. Bei diesem Prozessschritt werden auch Makroorganismen mit einer Größe oberhalb des ersten Grenzwertes sofort wieder rückgeführt, wodurch ein Eingriff in das Ökosystem weiter reduziert wird.

Dazu werden Organismen und organische Bestandteile des Schlammes mit einer Korngröße oberhalb des zweiten Grenzwertes mit zumindest einer Einrichtung wie einem Schwertrübesortierer aussortiert und in das Gewässer rückgeführt, bevor die anorganischen Feststoffe zu Produkten verarbeitet werden. Ein Schwertrübesortierer hat sich als vorteilhaft erwiesen, um Bestandteile des Schlammes auszusortieren, die eine Dichte in einem definierten Bereich aufweisen. Dadurch können diese organischen Bestandteile und Organismen, wie Holz und Mikroorganismen, wieder in das Ökosystem rückgeführt werden. Gleichzeitig wird gewährleistet, dass die hergestellten Produkte frei von organischen Bestandteilen sind, welche eine Qualität verringern würden. Bevorzugt werden zwei Schwertrübesortierer nebeneinander betrieben, um bei geringem Ausfallsrisiko hohe Mengen verarbeiten zu können.

Mit Vorteil werden die anorganischen Feststoffe des Schlammes mit einer Korngröße unterhalb des ersten Grenzwertes durch Entwässerung zu insbesondere festen Produkten verarbeitet. Dadurch kann ein hohes Maß an Verwertbarkeit des Schlammes erzielt werden. Bevorzugt werden zwei Produkte hergestellt, wobei das Produkt Feinsand mit einer Korngröße oberhalb des zweiten Grenzwertes und unterhalb des ersten Grenzwertes, etwa 0,04 mm bis 1 mm, und das zweite Produkt Schlick mit einer Korngröße unterhalb des zweiten Grenzwertes von etwa 0,04 mm ist. Mit Vorteil wird der Feinsand mittels Zyklonen und der Schlick wie vorstehend beschrieben insbesondere aus dem Überlauf der Zyklone mittels Eindicken und Pressen gewonnen. Gleichzeitig wird eine effiziente Vertiefung des Gewässerbettes erreicht, da ein großer Teil eines Schlammvolumens wirtschaftlich verwertet wird. Die Entwässerung des Schlammes hat den Vorteil, dass nur die verwertbaren Teile des Schlammes verarbeitet und gelagert sowie abtransportiert werden, wodurch Transport- und Lagerkosten gespart werden. Bei dem erfindungsgemäßen Verfahren werden insbesondere feste Produkte gebildet, die gut lager- und transportierbar sind. Bevorzugt werden die Lagerung und der Abtransport der Produkte mittels gesonderten Schiffen bzw. sogenannten Schuten, die keinen eigenen Antrieb aufweisen, durchgeführt, sodass ein Verfahrensschritt des Lagerns und Abtransportierens von dem erfindungsgemäßen Verfahren entkoppelt ist und volle Lagerräume zu keiner Unterbrechung des Verfahrens führen.

Zweckmäßig ist es, wenn Feststoffe mit einer Korngröße unterhalb des ersten Grenzwertes und oberhalb des zweiten Grenzwertes, der kleiner als der erste Grenzwert ist, mit zumindest einer Hydrozyklon-Siebanlage zu einem Produkt, insbesondere Feinsand, verarbeitet werden. Derartige Anlagen haben sich besonders bewährt, um hohe Mengen auf kleinem Raum zu verarbeiten.

Bevorzugt wird ein Überlauf von Entwässerungs- und/oder Klassiereinrichtungen von polycyclischen aromatischen Kohlenwasserstoffen und/oder Schwermetallen gereinigt. Üblicherweise muss ein aus Schifffahrtsrinnen entnommenes Material als Sondermüll entsorgt werden, da insbesondere aufgrund Schifffahrt sowie Industrie ein Schlamm am Boden des Gewässers zumeist mit Schwermetallen, insbesondere Arsen, Blei, Cadmium, Chrom, Kupfer, Nickel, Quecksilber und Zink sowie polycyclischen aromatischen Kohlenwasserstoffen (PAK), wie Schmieröl, verunreinigt ist. Mittels des Verfahrensschrittes der Reinigung von diesen Verunreinigungen kann einerseits ein reines Produkt hergestellt und andererseits gleichzeitig ein gereinigtes Prozesswasser in das Gewässer rückgeführt werden. Um die Schwermetalle und PAK abzuscheiden, sind mehrere chemisch-physikalische Verfahrensschritte erforderlich, wobei beispielsweise unter Zugabe eines Flockungsmittels eine chemische Fällungsreaktion erfolgt. Die Reinigung des Prozesswassers kann in einer modular in die bestehende Anlage integrierten Reinigungseinrichtung durchgeführt werden. Abhängig von der Anzahl der zu entfernenden Schwermetalle und PAK kann es erforderlich sein, mehrere zusätzliche Becken zu verwenden, um eine effektive Wasseraufbereitung zu erzielen. Es kann vorgesehen sein, die Reinigungseinrichtung einem Überlauf von vorstehend beschriebenen Klärtürmen bzw. Hochklärern nachgeordnet anzuordnen, um nur jenes Prozesswasser zu reinigen, welches bereits von Feststoffen gereinigt ist, und dieses gereinigte Prozesswasser in das Gewässer rückzuführen. Dadurch wird eine Reinigung des Gewässers erreicht. Alternativ kann auch vorgesehen sein, die Reinigungseinrichtung den Klärtürmen vorgeordnet bzw. an einer beliebigen Position im Verfahren anzuordnen, um auch eine Reinheit der hergestellten Produkte zu erzielen. So kann auch vorgesehen sein, das Prozesswasser nicht wieder in das Gewässer rückzuführen und dieses dauerhaft in einem Reinigungskreislauf zirkulieren zu lassen. Bei dieser Variante verlässt das Prozesswasser das Wasserfahrzeug bzw. eine auf dem Wasserfahrzeug angeordnete Aufbereitungsanlage nicht bzw. nicht sofort.

Zweckmäßigerweise wird das Verfahren auf einem Schiff durchgeführt, wobei Schlamm vom Grund des Gewässers unter gleichzeitiger Vertiefung eines Gewässerbettes gefördert wird.

Die weitere Aufgabe wird erfindungsgemäß dadurch Anspruch 7 gelöst, wobei einem Wasserfahrzeug der eingangs genannten Art Einrichtungen vorgesehen sind, mit welchen grobe Feststoffe mit einer Korngröße oberhalb des ersten Grenzwertes sowie Organismen und organische Bestandteile mit einer Korngröße oberhalb des zweiten Grenzwertes in das Gewässer rückführbar und anorganische Feststoffe mit einer Korngröße unterhalb des ersten Grenzwertes zu Produkten verarbeitbar sind.

So kann ein ökologisch unproblematisches und wirtschaftliches Verfahren günstig und auf kleinem Raum umgesetzt werden.

Mit Vorteil ist zu einem Abtrennen der groben Feststoffe, die eine Korngröße oberhalb des ersten Grenzwertes aufweisen, vom Schlamm ein Zweideck-Rüttelsieb vorgesehen, das insbesondere einer Schlammabbaueinrichtung direkt nachgelagert angeordnet ist. Die Schlammabbaueinrichtung, bevorzugt ein Saugbagger, kann in das Wasserfahrzeug integriert oder auf einer getrennten Vorrichtung angeordnet sein. Mit dem Zweideck-Rüttelsieb werden nicht nur grobe Sandkörner, sondern auch Makroorganismen, die größer als der erste Grenzwert sind, abgetrennt. Bevorzugt werden die groben Feststoffe und die Makroorganismen sofort wieder in das Gewässer rückgeführt.

Zweckmäßigerweise ist zumindest ein Schwertrübesortierer vorgesehen, mit welchem Organismen und organische Bestandteile des Schlammes aussortierbar sind. Vorteilhaft ist es auch, wenn dem Schwertrübesortierer zumindest ein Taschenzyklon vorgelagert ist, der feine Bestandteile des Schlammes mit einer Korngröße unterhalb eines zweiten Grenzwertes vom Schlamm trennt, wobei der zweite Grenzwert etwa 0,04 mm beträgt. Dadurch werden mit dem Schwertrübesortierer lediglich jene Organismen und organischen Bestandteile des Schlammes aussortiert, die eine Korngröße oberhalb des zweiten Grenzwertes aufweisen. Der Überlauf des Taschenzyklons wird bevorzugt gemeinsam mit dem Überlauf weiterer Einrichtungen eingedickt und die enthaltenen Feststoffe zu einem weiteren Produkt verarbeitet, wie vorstehend ausgeführt.

Mit Vorteil ist zumindest eine Hydrozyklon-Siebanlage zum Verarbeiten von Feststoffen mit einer Korngröße oberhalb des zweiten Grenzwertes zu einem Produkt vorgesehen, wobei der zweite Grenzwert kleiner als der erste Grenzwert ist. Hierbei hat sich die Wahl eines zweiten Grenzwertes von etwa 0,04 mm besonders bewährt, um Feinsand als verwertbares Produkt herzustellen. Dazu wird ein erster Grenzwert von etwa 1 mm gewählt, sodass der Feinsand eine Korngröße von 0,04 mm bis 1 mm aufweist. Bevorzugt ist der vorstehend beschriebene Schwertrübesortierer in einer Materialflussrichtung vor der Hydrozyklon-Siebanlage mit dem zumindest einen Taschenzyklon vorgesehen. Dadurch weisen an der Hydrozyklon-Siebanlage ankommende Feststoffe eine Korngröße oberhalb des zweiten Grenzwertes auf und sind von Organismen und organischen Bestandteilen des Schlammes gereinigt, wodurch ein Produkt aus anorganischen Feststoffen erzielt wird.

Um einen Feinschlamm weiterzuverarbeiten und dabei effizient einzudicken, ist zumindest ein Klärturm vorgesehen. Bevorzugt sind zumindest zwei als Hochklärer ausgebildete Klärtürme vorgesehen, um das Verfahren effizient zu gestalten.

Zweckmäßigerweise ist eine Flockungsmitteldosiereinheit zum Beimengen eines Flockungsmittels vorgesehen. Vorteilhafterweise wird das Flockungsmittel einem Überlauf von Entwässerungs- und/oder Klassiereinrichtungen bzw. einem Prozesswasser beigemengt, um auch dieses Medium nutzen zu können. Das Beimengen des Flockungsmittels beschleunigt das Eindicken des Feinschlammes bzw. des Überlaufes der Entwässerungs- und/oder Klassiereinrichtungen, sodass die Effizienz weiter gesteigert wird.

Mit Vorteil ist zumindest eine Presse zum Herstellen eines verdichteten Produktes, insbesondere Schlick, vorgesehen. Bevorzugt ist die Presse dem zumindest einen Klärturm nachgelagert vorgesehen, sodass ein eingedickter Feinschlamm in der Presse verarbeitet werden kann.

Bevorzugt ist die zumindest eine Presse als Kammerfilterpresse ausgebildet, der insbesondere ein Homogenisierungsbecken vorgeschaltet ist. Das als Pufferspeicher für die Kammerfilterpresse dienende Homogenisierungsbecken erlaubt ein kontinuierlich ablaufendes Verfahren.

Zum Reinigen von einem Überlauf von Entwässerungs- und/oder Klassiereinrichtungen ist bevorzugt zumindest eine Reinigungseinrichtung, mit welcher polycyclische aromatische Kohlenwasserstoffe und/oder Schwermetalle entfernbar sind, vorgesehen. Diese Einrichtung kann wie vorstehend ausgeführt an verschiedenen Positionen angeordnet sein, um entweder nur ein Prozesswasser zu reinigen, welches in das Gewässer rückgeführt wird, oder Prozesswasser bzw. Schlamm in einem Kreislauf zu reinigen, ohne Prozesswasser in das Gewässer rückzuführen.

Um das Prozesswasser in das Gewässer bei Bedarf rückzuführen, ist bevorzugt eine Einrichtung zum Rückführen des Prozesswassers in das Gewässer vorgesehen.

Zweckmäßigerweise ist das Wasserfahrzeug als Schiff ausgebildet, wobei zu einem Schlammabbau ein Saugbagger vorgesehen ist. Der Saugbagger kann dabei ebenfalls auf dem Schiff oder einem gesonderten Wasserfahrzeug angeordnet sein. Anstatt des Saugbaggers kann auch ein konventioneller Hydraulikbagger mit Fräsaufsatz bzw. ein Baggerboot mit Pumpvorrichtung vorgesehen sein. Saugbagger haben sich jedoch bewährt, um Fördermengen von über 100 m³/h zu erzielen, wie diese bei großen Gewässern erforderlich sind. Ebenfalls ist es zweckmäßig, Schiffe vorzusehen, die Lagerräume aufweisen, um die hergestellten Produkte aufzunehmen. Dies können antriebslose Schuten sein, welche von Schleppschiffen bei Erreichen einer vollständigen Befüllung der Lagerräume durch leere Schuten getauscht werden.

Bevorzugt werden die hergestellten Produkte in getrennten Lagerräumen gelagert, um eine Durchmischung zu verhindern. So können das Wasserfahrzeug und der Saugbagger ständig an einer zu vertiefenden Position betrieben werden, wodurch eine Einsatzzeit maximiert wird.

Weitere Merkmale, Vorteile und Wirkungen der Erfindung ergeben sich anhand der nachfolgend dargestellten Ausführungsbeispiele. In den Zeichnungen, auf welche dabei Bezug genommen wird, zeigen:
- Fig. 1: ein erfindungsgemäßes Verfahren in Flussdiagrammdarstellung;
- Fig. 2: ein Verfahrensschema eines erfindungsgemäßen Verfahrens;
- Fig. 3: eine weitere Ausführungsvariante eines erfindungsgemäßen Verfahrens;
- Fig. 4: und 5 ein erfindungsgemäßes Wasserfahrzeug.

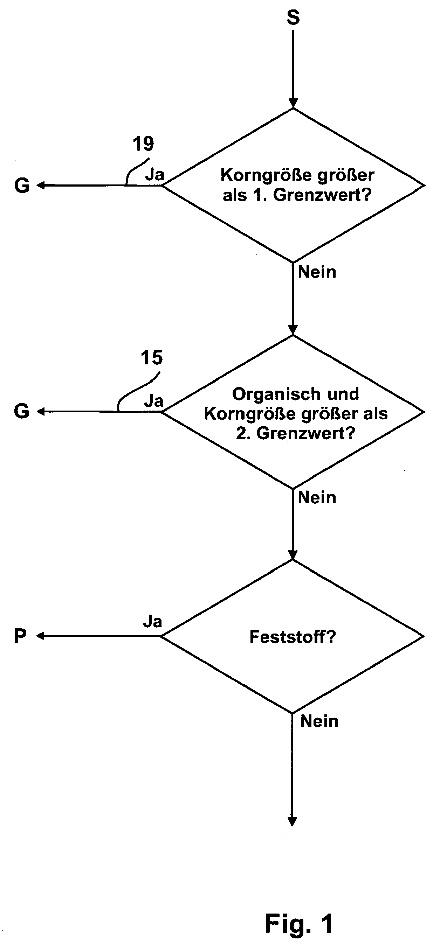

Fig. 1 zeigt in einem Flussdiagramm ein erfindungsgemäßes Verfahren. Ersichtlich ist, dass ein Schlamm S eines Gewässers G in einem ersten Verfahrensschritt von groben Feststoffen 19 und Makroorganismen mit einer Korngröße oberhalb eines ersten Grenzwertes getrennt wird. Diese groben Feststoffe 19 werden direkt in das Gewässer G rückgeführt. In einem weiteren Verfahrensschritt, welcher aus nicht dargestellten Teilschritten besteht, werden Organismen und organische Bestandteile 15 mit einer Korngröße oberhalb eines zweiten Grenzwertes von einem verbleibenden Schlamm getrennt. Schließlich werden in einem dritten Verfahrensschritt, welcher ebenfalls aus mehreren nicht dargestellten Teilschritten besteht, Feststoffe abgetrennt und zu verwertbaren Produkten P verarbeitet. Auf diese Weise kann ein umweltschonendes Verfahren zum Vertiefen von verschlammten Fahrrinnen umgesetzt werden, wobei aus dem geförderten Schlamm S Produkte P hergestellt werden, sodass das Verfahren besonders wirtschaftlich umsetzbar ist.

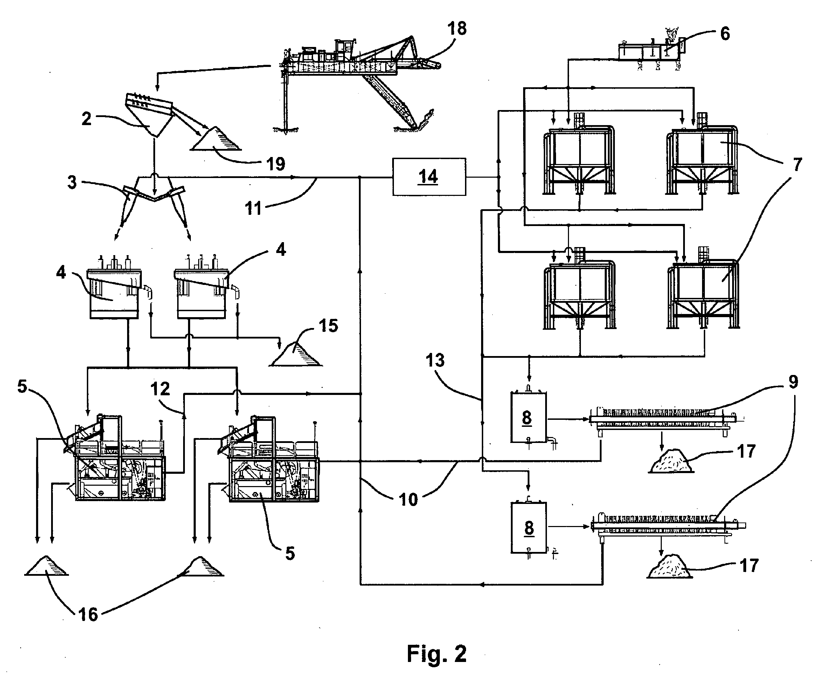

Fig. 2 zeigt schematisch ein erfindungsgemäßes Verfahren zur Aufbereitung von Flusssedimenten. Ersichtlich ist, dass Schlamm S von einem Grund eines Gewässers G mit einem Saugbagger 18 gefördert wird, der in einem daran anschließenden Prozessschritt in einem Vorsieb, insbesondere einem Zweideck-Rüttelsieb 2, von groben Feststoffen 19 und Makroorganismen getrennt wird, die eine Korngröße oberhalb eines ersten Grenzwertes aufweisen, der im Ausführungsbeispiel 1 mm beträgt. Diese groben Feststoffe 19 und Makroorganismen werden direkt in das Gewässer G rückgeführt und verursachen so keine Kosten über Transport oder Lagerung. Dies hat auch positive Auswirkungen auf ein Ökosystem des Gewässers G. Mittels Taschenzyklonen 3 werden in einem nächsten Prozessschritt Wasser sowie Feststoffe, die eine Korngröße unterhalb eines zweiten Grenzwertes aufweisen, von Feststoffen getrennt, die eine Korngröße oberhalb des zweiten Grenzwertes aufweisen. Wasser sowie die Feststoffe mit einer Korngröße unterhalb des zweiten Grenzwertes werden über einen Taschenzyklonüberlauf 11 in die Reinigungseinrichtung 14 transportiert. Der zweite Grenzwert, der im vorliegenden Ausführungsbeispiel 0,04 mm beträgt, kann beliebig nach oben oder unten verändert werden, indem die Taschenzyklone 3 entsprechend justiert werden. Für ein Produkt wie Feinsand 16 hat sich jedoch eine minimale Korngröße von 0,04 mm besonders bewährt. Den Taschenzyklonen 3 nachgeordnet sind Schwertrübesortierer 4 vorgesehen, an welche die Feststoffe mit einer Korngröße oberhalb des zweiten Grenzwertes übergeben werden. Die Schwertrübesortierer 4 trennen die Organismen und organischen Bestandteile 15 ab, welche in das Gewässer G rückgeführt werden. Aufgrund des Rückführens der Organismen und der organischen Bestandteile 15 wird eine negative Beeinträchtigung eines biologischen Gleichgewichts des Gewässers G minimiert. Den Schwertrübesortierern 4 nachgeordnet sind Hydrozyklone, insbesondere Hydrozyklon-Siebanlagen 5, vorgesehen. Diese scheiden aus dem Schlamm-Wasser-Gemisch, welches die Schwertrübesortierer 4 verlässt und nur noch anorganische Feststoffe enthält, Feinsand 16 mit einer Korngröße von 0,04 mm bis 1 mm ab. Ein Feinschlamm, der einen Hydrozyklonüberlauf 12 der Hydrozyklon-Siebanlagen 5, den Taschenzyklonüberlauf 11 der Taschenzyklone 3 und einen Kammerfilterpressenüberlauf 10 beinhaltet, wird in einer Reinigungseinrichtung 14 von Schwermetallen und polycyclischen aromatischen Kohlenwasserstoffen gereinigt, bevor dieser in Klärtürmen 7, insbesondere Hochklärern, weiterbehandelt wird. In den vorzugsweise vier Klärtürmen 7 wird dem Feinschlamm, der eine Korngröße aufweist, die kleiner als der zweite Grenzwert von 0,04 mm ist, ein Flockungsmittel, insbesondere Kartoffelstärke, beigemengt. Hierzu wird bevorzugt eine Flockungsmitteldosiereinheit 6 eingesetzt. Dies führt zu einem Eindicken des Feinschlammes, wodurch der Feinschlamm besonders günstig in Kammerfilterpressen 9 zu Schlick 17 als zweitem Produkt P gepresst werden kann. Um eine gleichmäßige Auslastung der Kammerfilterpressen 9 zu gewährleisten, ist vorteilhafterweise ein Homogenisierungsbecken 8 den Kammerfilterpressen 9 vorgeordnet, welches als Puffer für die Befüllung der Kammerfilterpressen 9 dient. Weiter wird in den Homogenisierungsbecken 8 eine pumpfähige Suspension für eine Weiterverarbeitung in den Kammerfilterpressen 9 gebildet. Die beiden Produkte P Feinsand 16 und Schlick 17 werden in getrennten Ladebereichen auf einer gesonderten Schute gelagert, sodass es zu keiner Vermischung der beiden Produkte P kommt.

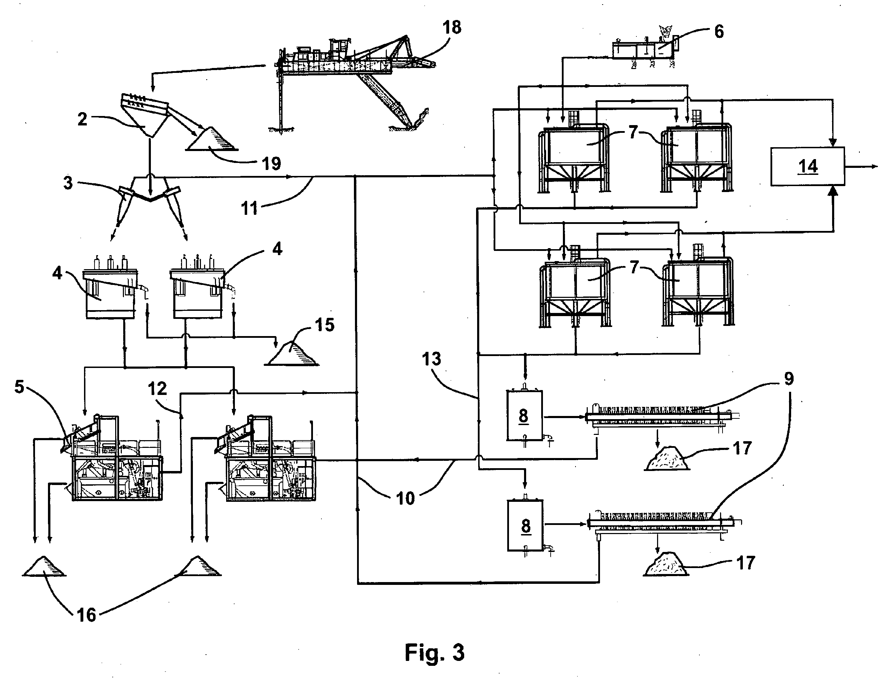

Fig. 3 zeigt eine weitere Ausführungsvariante eines erfindungsgemäßen Verfahrens, wobei die Reinigungseinrichtung 14 zur Abtrennung von Schwermetallen und polycyclischen aromatischen Kohlenwasserstoffen nicht vor den Klärtürmen 7, sondern diesen nachgelagert vorgesehen ist. Der Taschenzyklonüberlauf 11, der Hydrozyklonüberlauf 12 sowie der Kammerfilterpressenüberlauf 10 werden bei dieser Variante direkt wieder in die Klärtürme 7 geleitet, um eingedickt und anschließend zu Schlick 17 gepresst zu werden. Bei dieser Variante wird ein Klärturmüberlauf 13 der Klärtürme 7 von Schwermetallen und polycyclischen aromatischen Kohlenwasserstoffen gereinigt, bevor dieser in das Gewässer G rückgeführt wird. Dadurch kann eine erforderliche Transportkapazität des Wasserfahrzeuges 1 bzw. der Schuten deutlich reduziert werden, da im Schlamm S enthaltenes Wasser zu großen Teilen wieder in das Gewässer G rückgeführt wird.

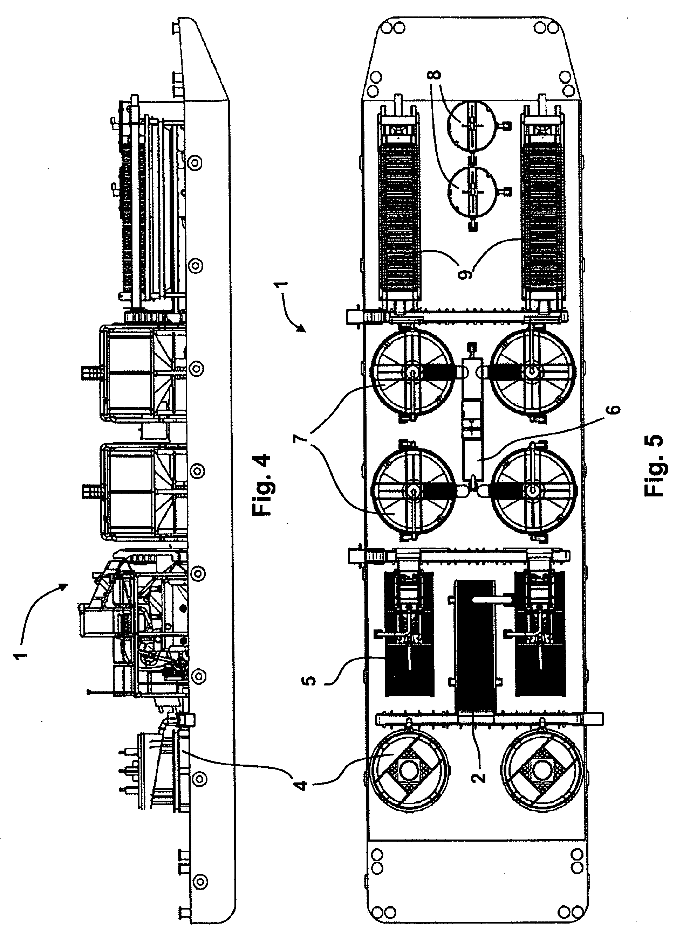

Fig. 4 und 5 zeigen ein Wasserfahrzeug 1 zur Durchführung eines erfindungsgemäßen Verfahrens in Seitenansicht und Draufsicht. Das Wasserfahrzeug 1 ist als Schiff ausgebildet, um Schlamm S zu fördern und aufzubereiten. Der Schlamm S kann dabei mittels eines Saugbaggers 18, der auf demselben Schiff oder einem gesonderten Baggerschiff angeordnet sein kann, gefördert werden. Dabei wird der Schlamm S vom Saugbagger 18, der im Ausführungsbeispiel auf einem gesonderten Schiff angeordnet ist, auf das Zweideck-Rüttelsieb 2 gefördert. Das Zweidecksieb bzw. Zweideck-Rüttelsieb 2 sortiert den Schlamm S in zwei Trennschichten (Sand mit einer Korngröße von mehr als 1 mm und eine Suspension mit einer Korngröße von unter 1 mm) und bewirkt eine Abtrennung von Sandkörnern und Makroorganismen mit einer Größe von mehr als 1 mm. Sand und Makroorganismen werden anschließend direkt vom Sieb in das Gewässer G rückgeführt. Ein Siebdurchgang des Zweideck-Rüttelsiebes 2, eine pumpfähige Suspension, wird im Verfahren einer organischen Abtrennung mittels Taschenzyklonen 3 und Schwertrübesortierern 4 zugeführt, wobei Mikroorganismen und organische Bestandteile bis zu dem zweiten Grenzwert von 0,04 mm aus der Suspension entfernt werden. Zwei Schwertrübesortierer 4, in denen auch die Taschenzyklone 3 angeordnet sind, sind daher nahe dem Zweideck-Rüttelsieb 2 angeordnet. Weiter sind zwei Hydrozyklon-Siebanlagen 5 ersichtlich, welche zwischen den Schwertrübesortierern 4 und den als Hochklärern ausgeführten Klärtürmen 7 angeordnet sind. Diese Hydrozyklon-Siebanlagen 5 bilden Kombinationsanlagen aus Zyklonen und Rüttelsieben bzw. Entwässerungssieben, in denen das Produkt P Feinsand 16 entsteht. Ein Hydrozyklonüberlauf 12 dieser Hydrozyklon-Siebanlagen 5 wird in die Klärtürme 7 geleitet. Zum Eindicken des Schlammes S in den Klärtürmen 7 ist die Flockungsmitteldosiereinheit 6 zwischen den Klärtürmen 7 vorgesehen, sodass Transportwege minimiert werden. Durch eine Zugabe des Flockungsmittels wird ein schnelles Absinken feiner Schlammbestandteile in den Klärtürmen 7 gewährleistet. Diese werden auf einem Boden der Klärtürme 7 aufgefangen und an die den Klärtürmen 7 nachgelagerten Homogenisierungsbecken 8 weitergeleitet. Die Homogenisierungsbecken 8 stellen einen Puffer für eine Befüllung der Kammerfilterpressen 9 dar und verhindern mittels eines Rührwerkes ein Absinken von Schwebstoffen, wodurch eine pumpfähige Suspension bereitgestellt wird. Die zwei dargestellten nachgelagerten Kammerfilterpressen 9 werden im Verfahren mit der Suspension aus den Homogenisierungsbecken 8 befüllt, woraufhin darin das zweite Produkt P Schlick 17 hergestellt wird. Für eine Lagerung der Produkte P Feinsand 16 und Schlick 17 sind nicht dargestellte räumlich getrennte Lager vorgesehen. Diese sind bevorzugt auf einem gesonderten Schiff bzw. einer antriebslosen Schute angeordnet, sodass das Wasserfahrzeug 1 kontinuierlich betrieben werden kann und lediglich das Schiff, auf welchem die Lagerräume angeordnet sind, regelmäßig entladen werden muss.

Mit dem beschriebenen Verfahren sowie dem Wasserfahrzeug 1 ist ein ökologisches Ausbaggern von verschlammten Fahrrinnen in Gewässern G möglich, wobei der geförderte Schlamm S zu verwertbaren Produkten P verarbeitet wird und gleichzeitig Wasser des Gewässers G von Verunreinigungen wie polycyclischen aromatischen Kohlenwasserstoffen und Schwermetallen gereinigt wird.

## Patentansprüche

1. Verfahren zur Gewinnung von Produkten (P) aus Schlamm (S) eines Gewässers (G) auf einem Wasserfahrzeug (1), wobei aus dem Schlamm (S) Feststoffe in mehreren Fraktionen unterschiedlicher Korngröße gewonnen werden, wobei grobe Feststoffe (19) mit einer Korngröße oberhalb eines ersten Grenzwertes von etwa 1 mm sowie mit zumindest einem Schwertrübesortierer (4) aus dem Schlamm (S) aussortierte Organismen und organische Bestandteile (15) mit einer Korngröße oberhalb eines zweiten Grenzwertes von etwa 0,04 mm in das Gewässer (G) rückgeführt werden und anorganische Feststoffe unterhalb des ersten Grenzwertes zu zumindest einem Produkt (P) verarbeitet werden.

2. Verfahren nach Anspruch 1, **dadurch gekennzeichnet, dass** anfallendes Prozesswasser in das Gewässer (G) rückgeführt wird.

3. Verfahren nach Anspruch 1 oder 2, **dadurch gekennzeichnet, dass** ein Überlauf von Entwässerungs- und/oder Klassiereinrichtungen (10, 11, 12) eingedickt und mittels Pressen zu einem Produkt (P), insbesondere Schlick (17), verarbeitet wird.

4. Verfahren nach Anspruch 3, **dadurch gekennzeichnet, dass** ein Flockungsmittel, insbesondere Kartoffelstärke, zum Eindicken eingesetzt wird.

5. Verfahren nach einem der Ansprüche 1 bis 4, **dadurch gekennzeichnet, dass** die anorganischen Feststoffe des Schlammes (S) mit einer Korngröße unterhalb des ersten Grenzwertes durch Entwässerung zu insbesondere festen Produkten (P) verarbeitet werden.

6. Verfahren nach einem der Ansprüche 1 bis 5, **dadurch gekennzeichnet, dass** das Verfahren auf einem Schiff durchgeführt wird, wobei Schlamm (S) vom Grund des Gewässers (G) unter gleichzeitiger Vertiefung eines Gewässerbettes gefördert wird.

7. Wasserfahrzeug (1) zur Gewinnung von Produkten (P) aus Schlamm (S) eines Gewässers (G), insbesondere zur Durchführung eines Verfahrens nach einem der Ansprüche 1 bis 6, wobei zumindest eine Einrichtung zur Gewinnung von verschiedenen Fraktionen von im Schlamm (S) enthaltenen Feststoffen vorgesehen ist, wobei Einrichtungen vorgesehen sind, mit welchen grobe Feststoffe (19) mit einer Korngröße oberhalb eines ersten Grenzwertes von etwa 1 mm sowie Organismen und organische Bestandteile (15) mit einer Korngröße oberhalb eines zweiten Grenzwertes von etwa 0,04 mm in das Gewässer (G) rückführbar und anorganische Feststoffe mit einer Korngröße unterhalb des ersten Grenzwertes zu Produkten (P) verarbeitbar sind, wobei zumindest ein Schwertrübesortierer vorgesehen ist, mit welchem die Organismen und organische Bestandteile (15) aus dem Schlamm (S) aussortierbar sind.

8. Wasserfahrzeug (1) nach Anspruch 7, **dadurch gekennzeichnet, dass** zu einem Abtrennen der groben Feststoffe, die eine Korngröße oberhalb des ersten Grenzwertes aufweisen, vom Schlamm (S) ein Zweideck-Rüttelsieb (2) vorgesehen ist, das insbesondere einer Schlammabbaueinrichtung direkt nachgelagert angeordnet ist.

9. Wasserfahrzeug (1) nach Anspruch 7 oder 8, **dadurch gekennzeichnet, dass** zumindest eine Hydrozyklon-Siebanlage (5) zum Verarbeiten von Feststoffen mit einer Korngröße oberhalb des zweiten Grenzwertes zu einem Produkt (P) vorgesehen ist, wobei der zweite Grenzwert kleiner als der erste Grenzwert ist.

10. Wasserfahrzeug (1) nach einem der Ansprüche 7 bis 9, **dadurch gekennzeichnet, dass** zumindest eine Presse zum Herstellen eines verdichteten Produktes (P), insbesondere Schlick (17), vorgesehen ist.

11. Wasserfahrzeug (1) nach Anspruch 10, **dadurch gekennzeichnet, dass** die zumindest eine Presse als Kammerfilterpresse (9) ausgebildet ist, der insbesondere ein Homogenisierungsbecken (8) vorgeschaltet ist.

12. Wasserfahrzeug (1) nach einem der Ansprüche 7 bis 11, **dadurch gekennzeichnet, dass** eine Einrichtung zum Rückführen des Prozesswassers in das Gewässer (G) vorgesehen ist.

13. Wasserfahrzeug (1) nach einem der Ansprüche 7 bis 12, **dadurch gekennzeichnet, dass** das Wasserfahrzeug (1) als Schiff ausgebildet ist, wobei zu einem Schlammabbau ein Saugbagger (18) vorgesehen ist.

## Claims

1. A method carried out aboard a vessel (1), for the production of products (P) from mud (S) from a body of water (G), wherein solids are obtained from the mud (S) in a plurality of fractions with different grain sizes, wherein coarse solids (19) with a grain size above a first threshold of approximately 1 mm as well as organisms and organic components (15) with a grain size above a second threshold of approximately 0.04 mm separated out from the mud (S) using at least one heavy medium separator (4) are recycled to the body of water (G) and inorganic solids below the first threshold are processed into at least one product (P).

2. The method as claimed in claim 1, **characterized in that** process water which arises is recycled to the body of water (G).

3. The method as claimed in claim 1 or claim 2, **characterized in that** an overspill from dewatering and/or classifying equipment (10, 11, 12) is thickened and processed into a product (P), in particular sludge (17), by pressing.

4. The method as claimed in claim 3, **characterized in that** a flocculating agent, in particular potato starch, is employed for thickening.

5. The method as claimed in one of claims 1 to 4, **characterized in that** the inorganic solids from the mud (S) with a grain size below the first threshold are processed in particular into solid products (P) by dewatering.

6. The method as claimed in one of claims 1 to 5, **characterized in that** the method is carried out on a ship, wherein mud (S) is conveyed from the bottom of the body of water (G) with simultaneous deepening of a bed of the body of water.

7. A vessel (1) for producing products (P) from mud (S) from a body of water (G), in particular by carrying out a method as claimed in one of claims 1 to 6, wherein at least one piece of equipment for producing different fractions of solids contained in the mud (S) is provided, wherein equipment is provided by means of which coarse solids (19) with a grain size above a first threshold of approximately 1 mm as well as organisms and organic components (15) with a grain size above a second threshold of approximately 0.04 mm can be recycled to the body of water (G) and inorganic solids with a grain size below the first threshold can be processed into products (P), wherein at least one heavy medium separator is provided, by means of which the organisms and organic components (15) can be separated from the mud (S).

8. The vessel (1) as claimed in claim 7, **characterized in that** in order to separate the coarse solids which have a grain size above the first threshold from the mud (S), a double-deck vibrating sieve (2) is provided which in particular is disposed immediately downstream of sludge separation equipment.

9. The vessel (1) as claimed in claim 7 or claim 8, **characterized in that** at least one hydrocyclone sieve unit (5) is provided for processing solids with a grain size above the second threshold to form a product (P), wherein the second threshold is smaller than the first threshold.

10. The vessel (1) as claimed in one of claims 7 to 9, **characterized in that** at least one press is provided for the production of a densified product (P), in particular sludge (17).

11. The vessel (1) as claimed in claim 10, **characterized in that** the at least one press is configured as a chamber filter press (9) which in particular has a homogenization tank (8) positioned upstream thereof.

12. The vessel (1) as claimed in one of claims 7 to 11, **characterized in that** equipment is provided for recycling the process water to the body of water (G).

13. The vessel (1) as claimed in one of claims 7 to 12, **characterized in that** the vessel (1) is constructed as a ship, wherein a suction dredger (18) is provided in order to separate the sludge.

## Revendications

1. Procédé destiné à récupérer des produits (P) à partir de boue (S) d'un plan d'eau (G) sur une embarcation (1), à partir de la boue (S) étant récupérés des solides en plusieurs fractions de différentes grosseurs de grain, des solides (19) grossiers d'une grosseur de grain supérieure à une première valeur limite d'environ 1 mm, ainsi que des organismes et composants (15) organiques triés à partir de la boue (S) à l'aide d'au moins un trieur de suspensions denses (4), d'une grosseur de grain supérieure à une deuxième valeur limite d'environ 0,04 mm étant reconduits dans le plan d'eau (G) et des solides anorganiques inférieurs à la première valeur limite étant traités en au moins un produit (P).

2. Procédé selon la revendication 1, **caractérisé en ce que** de l'eau de processus produite est reconduite dans le plan d'eau (G).

3. Procédé selon la revendication 1 ou la revendication 2, **caractérisé en ce qu'**on épaissit un trop-plein de systèmes de déshydratation et/ou de classification (10, 11, 12) et on le traite au moyen de presses en un produit (P), notamment de la vase (17).

4. Procédé selon la revendication 3, **caractérisé en ce que** pour l'épaississement, on met en oeuvre un floculant, notamment de la fécule de pommes de terre.

5. Procédé selon l'une quelconque des revendications 1 à 4, **caractérisé en ce que** les solides anorganiques de la boue (S) d'une grosseur de grains inférieure à la première valeur limite son traités par déshydratation en produits (P) notamment solides.

6. Procédé selon l'une quelconque des revendications 1 à 5, **caractérisé en ce que** le procédé est réalisé sur un bateau, de la boue (S) du fond du plan d'eau (G) étant convoyée sous approfondissement simultané d'un lit du plan d'eau.

7. Embarcation (1) destinée à récupérer des produits (P) à partir de boue (S) d'un plan d'eau (G) notamment destinée à réaliser un procédé selon l'une quelconque des revendications 1 à 6, au moins un système de récupération de différentes fractions de solides contenues dans la boue (S) étant prévu, des systèmes étant prévus, à l'aide desquels des solides grossiers (19) d'une grosseur de grain supérieure à une première valeur limite d'environ 1 mm, ainsi que des organismes et des composants (15) organiques d'une grosseur de grain supérieure à une deuxième valeur limite d'environ 0,04 mm pouvant être reconduits dans le plan d'eau (G) et des solides anorganiques d'une grosseur de grain inférieure à la première valeur limite pouvant être traités en produits (P), au moins une trieuse de suspensions denses étant prévue, à l'aide de laquelle les organismes et les composants (15) organiques peuvent être triés à partir de la boue (S).

8. Embarcation (1) selon la revendication 7, **caractérisée en ce que** pour séparer de la boue (S) des solides grossiers qui présentent une grosseur de grain supérieure à la première valeur limite, il est prévu un crible vibrant (2) à deux étages qui est placé directement en aval d'un système de décomposition de boue.

9. Embarcation (1) selon la revendication 7 ou la revendication 8, **caractérisée en ce qu'**il est prévu au moins un système de criblage (5) hydrocyclonique, pour le traitement des solides d'une grosseur de grain supérieure à la deuxième valeur limite en un produit (P), la deuxième valeur limite étant inférieure à la première valeur limite.

10. Embarcation (1) selon l'une quelconque des revendications 7 à 9, **caractérisée en ce qu'**il est prévu au moins une presse pour fabriquer un produit (P) compacté, notamment de la vase (17).

11. Embarcation (1) selon la revendication 10, **caractérisée en ce que** l'au moins une presse est conçue en tant que presse filtrante à plateaux (9) en amont de laquelle est monté notamment un bassin d'homogénéisation (8).

12. Embarcation (1) selon l'une quelconque des revendications 7 à 11, **caractérisée en ce qu'**il est prévu un système pour reconduire l'eau du processus dans le plan d'eau (G).

13. Embarcation (1) selon l'une quelconque des revendications 7 à 12, **caractérisée en ce que** l'embarcation (1) est conçue en tant que bateau, une drague suceuse (18) étant prévue pour la décomposition de la boue.
